# EUROPÄISCHE PATENTSCHRIFT

(11) **EP 2 741 977 B1**
(45) Veröffentlichungstag und Bekanntmachung des Hinweises auf die Patenterteilung: **14.09.2016**
(21) Anmeldenummer: 13737270.2
(22) Anmeldetag: 17.07.2013
(51) Int. Cl.: B65G 1/04, B65G 1/137

(54) **VERFAHREN ZUM BEREITSTELLEN VON TRANSPORTEINHEITEN AUS EINEM LAGER**
METHOD FOR PROVIDING TRANSPORT UNITS FROM A WAREHOUSE
PROCÉDÉ POUR EXTRAIRE DES UNITÉS DE TRANSPORT D'UN MAGASIN

(30) Priorität: 06.08.2012 DE 102012107176
(43) Veröffentlichungstag der Anmeldung: 18.06.2014
(73) Patentinhaber: Dematic Systems GmbH, 63150 Heusenstamm (DE)
(72) Erfinder: YAMASHITA, Shin, 63179 Obertshausen (DE)
(74) Vertreter: Moser Götze & Partner Patentanwälte mbB
(86) Internationale Anmeldenummer: PCT/EP2013/065061
(87) Internationale Veröffentlichungsnummer: WO 2014/023539

(56) Entgegenhaltungen:
- EP-A1- 1 234 785
- EP-A1- 1 486 435
- EP-B1- 1 964 792
- DE-A1-102006 025 620

## Beschreibung

Die Erfindung betrifft ein Verfahren zum Bereitstellen von Transporteinheiten aus einem Lager auf mindestens einer Auslagerbahn nach dem Oberbegriff von Anspruch 1.

Beim Kommissionieren oder Zusammenstellen von Aufträgen aus fertig kommissionierten Transporteinheiten, wie z.B. Artikel oder Behälter, ist es notwendig, die Transporteinheiten, die zu einem gemeinsamen Auftrag gehören, gezielt oder sortiert zur Verfügung zu stellen. Dazu ist es üblich, die Transporteinheiten eines Auftrags zwischen zu speichern (puffern), bis alle für den Auftrag notwendigen Transporteinheiten vorliegen. Diese werden dann gemeinsam auf eine Sammelstrecke aufgegeben, die sie z. B. zur Palettierung, Kommissionierstation, Warenausgabe, Versand etc. führt.

Zum einem (Hoch)Regallager gehört ein Zufuhr- oder Einlagerungsbereich, über den die Waren angeliefert werden und von dem die Regalbediengeräte die Waren zwecks Einlagerns abholen, die sogenannte Vorzone. Analog wird ein Auslagerungsbereich benötigt, an dem die Regalbediengeräte die Ware nach dem Auslagern ablegen, die ebenfalls der Vorzone zugerechnet wird. Bei automatischen Kommissionierlagern sind in derVorzone üblicherweise Kommissionierplätze angeordnet. In der Vorzone erfolgt auch die Identifizierung der Ware für das Lagerverwaltungssystem bzw. den Materialflussrechner.

Aus der eigenen EP 1 964 792 B1 ist ein gattungsgemäßes Verfahren zum Bereitstellen von Transporteinheiten aus einem Lager in einer gewünschten Reihenfolge auf mindestens einer Sammelstrecke bekannt. Dabei werden Regalbediengeräte in jeder Lagerregalgasse, Auslagerlifte und Auslagerbahnen aufeinander derart abgestimmt gesteuert und mit Gütern beaufschlagt, dass diese letztendlich sortiert auf der Sammelstrecke enden bzw. von dieser abgegeben werden.

Die Steuerung und Abstimmung ist somit relativ komplex und benötigt in der sogenannten Vorzone, also dem Bereich außerhalb des eigentlichen Regals, einen ersichtlichen technischen Aufwand.

Aufgabe der Erfindung ist es demgegenüber, ein Verfahren bereitzustellen, das auf einfachere Weise und verringertem technischem Aufwand eine sortierte Auslagerung unter Verzicht auf eine Sortierung außerhalb der Gassen erlaubt.

Diese Aufgabe wird durch das in Anspruch 1 wiedergegebene Verfahren gelöst. Bevorzugte Ausgestaltungen sind in den Unteransprüchen angegeben.

Erfindungsgemäß ist erkannt worden, dass, wenn zwischen zwei angrenzenden Lagerregalen ein direkter Austausch von Transporteinheiten von einer Lagerregalgasse in eine benachbarte Lagerregalgasse über Querförderplätze in den Lagerregalen erfolgt, auf eine Verteilung und/oder komplexe Sortierung im der Vorzone verzichtet werden kann, da die Transporteinheiten bereits sortiert ausgelagert werden, auch wenn sie zunächst nicht in einer gemeinsamen Regalgasse angeordnet waren, da sie Zwischenzeitlich in der auslagernden Gasse gelagert werden auch wenn sie anfänglich wo anders gelagert waren. Somit kann unter Verzicht auf eine Verteilung oder Sortierung außerhalb der Gassen ein direkter Transfer der Transporteinheiten ohne sich kreuzende Förderer erreicht werden und dies mit einem verringerten und vereinfachtem technischem Aufwand und sogar kleinerem Raumbedarf und hoher Zuverlässigkeit. Die Transporteinheiten können also einfach aus der jeweiligen Gasse in der benötigten Reihenfolge ausgelagert werden. Erfindungsgemäß übernimmt dabei die Ein- und Auslagervorrichtung die Bewegung der Transporteinheiten in den Querförderplätzen (Q), d.h. es gibt keine weitere aktive Antriebstechnik im Regal, sondern die Ein- und Auslagervorrichtung selber ist der einzig aktive Mechanismus beim Querverlagern. Insbesondere legt die Ein- und Auslagervorrichtung die Transporteinheiten aus der Quellgasse direkt in die Querförderplätze der Zielgasse ab (durch mehrfach tiefe Einlagerung), so dass die Ein- und Auslagervorrichtung der benachbarten Zielgasse einfach darauf Zugriff hat. Insbesondere handelt es sich um ein vollautomatisiertes Lager.

Mit anderen Worten, es werden Regallagerplätze von aneinanderstoßenden Regalen zum Durchreichen von Transporteinheiten von einer Regalseite zur nächsten verwendet, so dass die Transporteinheiten wie bei einer Durchreiche von einem Regal ins nächste übergeben werden können.

Somit wird ein Querfördern oder Sortieren innerhalb der Regale selbst möglich und es kann entsprechend auf ein "Querfördern" in der Vorzone verzichtet werden.

Sinnvollerweise sind die Querförderplätze in jeder Ebene der Lagerregale oder ausgewählten Ebenen vorgesehen.

Eine besonders gute Weg-Zeit-Optimierung wird erreicht, wenn die Querförderplätze mittig oder in Regallängsrichtung dem Auslagerlift oder Einlagerlift näher angeordnet sind. Es ist ebenfalls möglich, mehrere Querförderplätze in der jeweiligen Ebene vorzusehen und ggf. an unterschiedlichen Positionen.

Die Querförderplätze können auch als Zwischenspeicher dienen, d.h. die Transporteinheiten verbleiben darin, bis sie tatsächlich benötigt bzw. ausgelagert werden. Dies ist insbesondere sinnvoll, wenn die Querförderplätze zu der endgültigen Zielgasse der Transporteinheit gehören.

Der Austausch kann aktiv oder passiv in Hinblick auf die Ein- und Auslagervorrichtung erfolgen, d.h. der Querförderplatz kann einerseits einfach eine passive Abstellfläche sein, auf der die Ein- und Auslagervorrichtung der einen Gasse Transporteinheiten abstellt (quasi einlagert) und von dem das Regalbediengerät der benachbarten Gasse Transporteinheiten entgegennimmt (quasi auslagert). Dabei kann dieser Vorgang pro Regallagerplatz bzw. Querförderplatz immer nur in eine Richtung oder in beide Richtungen erfolgen.

Andererseits ist es ebenfalls möglich den Querförderplatz mit entsprechender Fördertechnik auszustatten, wie lose Rollenbahn ggf. mit Neigung, Förderbänder ohne Antrieb etc. Dann kann die Ein- und Auslagervorrichtung die Transporteinheiten abstellen und die Fördertechnik des Querförderplatzes nimmt den Transport vor. Entsprechend können die Querförderplätze als konventionelle Lagerplätze, Durchlaufregale mit und ohne Neigung, passivem Antrieb, als Rollenförderer, Bandförderer usw. ausgestaltet sein.

Durch die Einfachheit der Querförderplätze ist auch eine nachträgliche Nach- und Umrüstbarkeit von Querförderplätzen und ein flexibles Anpassen an die benötigte Leistung des Lagersystems möglich.

Die Querförderplätze können also wahlweise zum bidirektionalen oder unidirektionalen und/oder zum aktiven oder passiven Austausch ausgestaltet sein.

Die Ein- und Auslagervorrichtungen können ebenso die Transporteinheiten in den Querförderplätzen zum Austausch doppelt tief einlagern oder mehrfach tief einlagern. Die Ein- und Auslagervorrichtungen der einen Gasse können also die Transporteinheiten in den Querförderplätzen so tief einlagern, dass sie bereits dem benachbarten Regal zuzurechnen sind und von der entsprechenden Ein- und Auslagervorrichtung "normal" erreichbar sind.

Dazu können die Lastaufnahmemittel der Ein- und Auslagervorrichtungen, z.B. Teleskopschienenarme, eine erweiterte Reichweite aufweisen.

Ebenso ist eine gestapelte Lagerung der Transporteinheiten denkbar.

Da die Querförderplätze besonders stark beansprucht werden, ist es sinnvoll, wenn die Querförderplätze eine reibungsvermindernde Oberfläche aufweisen und/oder eine strukturelle Verstärkung vorgenommen wird. Somit wird auch eine Beschädigung der Transporteinheiten verringert oder sogar ganz verhindert.

Besonders bevorzugt ist es, wenn die Ein- und Auslagervorrichtungen Regalbediengeräte oder Einebenenregalbediengeräte sind. Besonders geeignet sind Shuttle oder Satellitenfahrzeuge. Auch einsetzbar sind solche Shuttle, die eine Hubplattform oder mehrere übereinander angeordnete Lastaufnahmemittelplattformen zum Bedienen mehrerer Ebenen von einer Fahrschiene aus aufweisen.

So ist es nach der Erfindung möglich, eine besonders hohe Auslagerleistung bei vollständiger Einhaltung der gewünschten Reihenfolge der Transporteinheiten in jeglicher Gasse zu erreichen. Dies wird zudem noch mit deutlich weniger technischem Aufwand als nach dem Stand der Technik erreicht.

Es versteht sich, dass soweit der Begriff Transporteinheiten gebraucht wird, dies nicht beschränkend aufzufassen ist, sondern auch andere Transportarten (z.B. Tabletts, Paletten etc.) mit gleichem Erfolg im Rahmen der Erfindung verwendet werden können. Der Begriff Transporteinheiten umfasst insbesondere auch Tablare, Behälter, Kartons, Packungseinheiten - d.h. zusammengefasste Einzelartikel, etc. und Einzelartikel.

Diese Transporteinheiten können entweder Quelleinheiten sein, aus denen ein Kommissionierer Artikel eines Auftrags entnimmt, so dass sie als Quelle oder Spender (oft auch Produkteinheiten genannt) fungieren, oder diese Einheiten können Auftragseinheiten zum Sammeln/Zusammenstellen von Artikeln eines Auftrags sein. Nachfolgend wird zur Vereinfachung, wo möglich, lediglich der Begriff Transporteinheiten verwendet.
Die Transporteinheiten können ohne Kenntnis der späteren Reihenfolge beliebig ("chaotisch") über das gesamte System verteilt eingelagert werden. Es ist dabei im Gegensatz zur DE 299 12 230 U1 keine Beschränkung auf etwaige Module oder Lagerbereiche notwendig.

Als Einebenenregalbediengerät oder Shuttle kommen insbesondere sogenannte MultiShuttle® zum Einsatz. Diese sind unter anderem in der EP 1 254 852 A1 beschrieben. Der MultiShuttle® ist ein universell einsetzbares und modular aufgebautes System, das Lagerung und Transport in einem durchgängigen Konzept vereint. Den Bereich der Automatischen Kleinteilelager (AKL) ergänzt der MultiShuttle® als eine leistungsstarke, preisgünstige und innovative Lösung. Es handelt sich um ein schienengebundenes Fahrzeug, das im Regal und das gesamte Lagersystem bedient. Das Systemkonzept basiert auf autonomen, schienengeführten Fahrzeugen zum Behältertransport, die innerhalb und außerhalb des Lagersystems verkehren. Ein spezielles Lastaufnahmemittel ermöglicht kurze Lastwechselzeiten sowie simultane Be- und Entladungen. Das System verfügt über Fahrschienen, die in jeder Ebene des Lagers beziehungsweise aufgeständert oder abgehangen in der Vorzone installiert sind. Sie übernehmen neben der Führung auch die Spannungsversorgung der Fahrzeuge.

Die Shuttles können in zwei Varianten verwendet werden, einer sogenannten "captive" oder "roaming" Anordnung. In der captive Anordnung verbleiben die Shuttle in ihrer jeweiligen Ebene. In der roaming Variante wechseln sie die Ebenen nach Bedarf.

Als Auslagerlift kommen insbesondere Vertikalförderer in Betracht. Günstig ist es, wenn jeder Auslagerlift ein oder mehrere, insbesondere zwei Plätze aufweist.

Weiterhin ist es sinnvoll, wenn jede Lagerregalebene mindestens einen Pufferplatz zur Entkopplung von Einebenenregalbediengerät und Auslagerlift aufweist. Dies ermöglicht es, die schnelleren Einebenenregalbediengeräte voll auszulasten und ein Leerlaufen des Lifts zu verhindern.

Bevorzugterweise ist jeder Auslagerlift mit mehreren Auslagerbahnen verbunden. Dies verbessert die Möglichkeiten der Sortierung und erhöht die Anzahl der parallel bearbeitbaren Aufträge bzw. die Zahl der versorgbaren Stationen.

Im einfachsten Fall sind die Auslagerbahnen als Staubahnen oder Förderer ausgeführt. Diese können z. B. mit einer Staumechanik, insbesondere einem verfahrbaren Stoppelement, versehen sein.

Weiterhin ist es von Vorteil, wenn jeder Auslagerlift pro Platz einen separat angetriebenen Förderer aufweist. Insbesondere ist es dann sinnvoll, wenn jeder Auslagerlift zwei Plätze aufweist, die jeweils mit einem separat angetriebenen Förderer versehen sind, die in unterschiedliche Richtungen verfahrbar sind. Somit kann die Übergabe von zwei Transporteinheiten pro Ebene (z.B. bei zuvor stehender Anordnung) immer gleichzeitig in unterschiedliche Richtungen bzw. auf unterschiedliche Auslagerpuffer, z.B. nach Links und Rechts erfolgen. Dazu wird die Aufnahme der Transporteinheiten auf den Lift vorzugsweise so gesteuert, dass die beiden Transporteinheiten auf eine Ebene abgegeben werden sollen. Aufgrund der hohen Leistungsfähigkeit der eingesetzten MultiShuttle ist dies möglich, da die Übergabeplätze (Pufferplatz) zum Auslagerlift praktisch immer belegt sind, so dass für die Steuerung des Auslagerlifts eine Auswahlmöglichkeit gegeben ist, die die entsprechende Belegung des Lifts mit Transporteinheiten für unterschiedliche Auslagerpuffer einer Ebene erlaubt.

Das System zeichnet sich ferner durch eine hohe Flexibilität aus, da die Ein- und Auslagerbahnen an beliebigen Stellen an die entsprechenden Lifte angeschlossen werden können.

Analog der Auslagerlifte können ebenfalls dedizierte den Auslagerliften entsprechende Einlagerlifte mit entsprechend zuführenden Verteilbahnen vorgesehen sein. Andererseits ist es auch möglich, die Auslagerlifte so zu steuern, dass sie neben der Auslagertätigkeit auch als Einlagerlifte dienen können. In umgekehrter Weise können bei Bedarf auch ggf. vorhandene dedizierte Einlagerlifte als Auslagerlifte verwendet werden. Dies ermöglicht auch bei Störungen einzelner Lifte einen unterbrechungsfreien Betrieb bzw. eine Erhöhung der Leistung des Systems. Dazu müssen die Ein- bzw. Auslagerstrecken zwischen Lift und Regal in der Höhe unterschiedlich angeordnet sein. Dies bedingt das Vorhandensein zweier gleichartiger kombinierter Ein- und Auslagerebenen, deren Sammelstrecken nach passieren der letzten Auslagerstrecke in Sequenz zusammengeführt werden.

Durch die Funktion des Querverschiebens kommt der Vorteil dass im Falle des Ausfalls z.B. eines Aus-/ Einlagerlifts bzw. Bahnen die Funktion der betroffenen Gasse aufrecht erhalten werden kann.

Die Erfindung erlaubt die Verwendung von vier grundlegenden Ware-Zum-Mann (GTP) Auftragsabarbeitungsstrategien und Konsolidierungsstrategien von vollen Quelleinheiten in dem automatisierten Lager basierend auf der Anzahl der Gänge, Kommissionierstationen, Liften, Auftragsauslastung und -verteilung und Auftragssowie Lagerdetails (Profile) usw. wenn sie in einer GTP Anwendung Einsatz finden:
- Nur relevante Quelleinheiten werden zu einem bestimmten Gang mittels der Querförderplätze transferiert, wobei der Gang beruhend auf einer Minimierung der Bewegung in den Querförderplätzen zwischen Gängen und der Auftragsauslastung und -verteilung ausgewählt wird. Mit anderen Worten, zum Kommissionieren wird der Gang ausgewählt, der eine Minimierung der Bewegung der Produkteinheiten zur Auftragsabarbeitung bzw. Konsolidierung von vollen Quelleinheiten erlaubt und die Auftragsvervollständigung kann an einer einzigen Kommissionierstation erfolgen.
- Nur Auftragseinheiten werden im Lager mittels der Querförderplätze transferiert. Mit anderen Worten, das Kommissionieren wird an jedem relevanten Gang durchgeführt, in dem eine relevante Produkteinheit gelagert ist und die Auftragseinheiten "reisen" über mehrere Gänge zu einer Mehrzahl von Kommissionierstationen bis zur Auftragserfüllung.
- Sowohl Auftragseinheiten wie Produkteinheiten werden im automatisierten Lager mittels der Querförderplätze transferiert. Mit anderen Worten, das Kommissionieren wird an wenigen ausgewählten Gängen durchgeführt; an denen relevante Produkteinheiten für einen Auftrag mittels der Querförderplätze konsolidiert werden und die Auftragseinheiten "reisen" in gleicher Weise über mehrere Gänge zu ausgewählten Kommissionierstationen bis zur Auftragserfüllung. Die Konsolidierung der Auftragseinheiten und Produkteinheiten basiert auf einer Optimierung der Auftragsauslastung und -verteilung sowie der optimalen Verwendung solcher beweglichen Ressourcen, wie z.B. Regalbediengeräten, Lifte etc.
- Eingehende Quelleinheiten bzw. volle Quelleinheiten werden im automatisierten Lager direkt in denjenigen Gang oder nächstgelegenen möglichen Gang eingelagert, der zur Auftragsabarbeitung benutzt oder höchstwahrscheinlich verwendet werden wird, basierend auf den zum Zeitpunkt der Einlagerung verfügbaren Informationen unter Berücksichtigung einer Minimierung des Querverschiebens in den Querförderplätzen. Diese Information umfasst, ist aber nicht beschränkt auf:
   - Momentane Produktverteilung oder Abweichungen jedes Produkts im Lager;
   - Bereits mit einzelnen Gängen verknüpfte Aufträge;
   - Zur Abarbeitung anstehende Aufträge;
   - Zusammenfassung von Familien bzw. Produktkategorien

Weitere Merkmale und Einzelheiten der Erfindung ergeben sich aus der nachfolgenden Beschreibung der Zeichnung. Es zeigen:

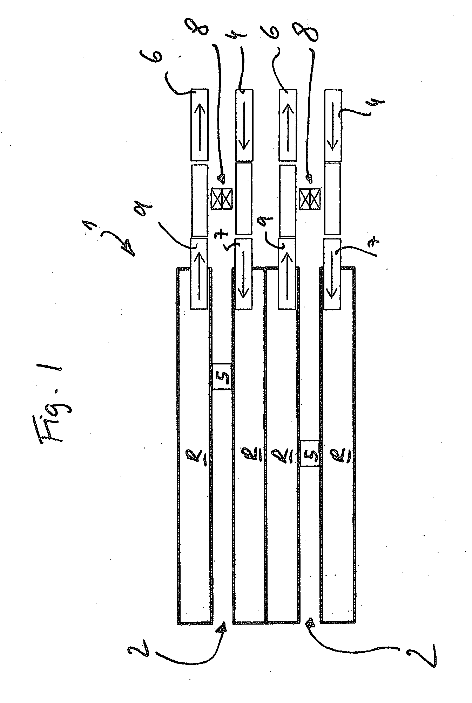

Figur 1 eine schematische Ansicht auf ein Lager von oben;

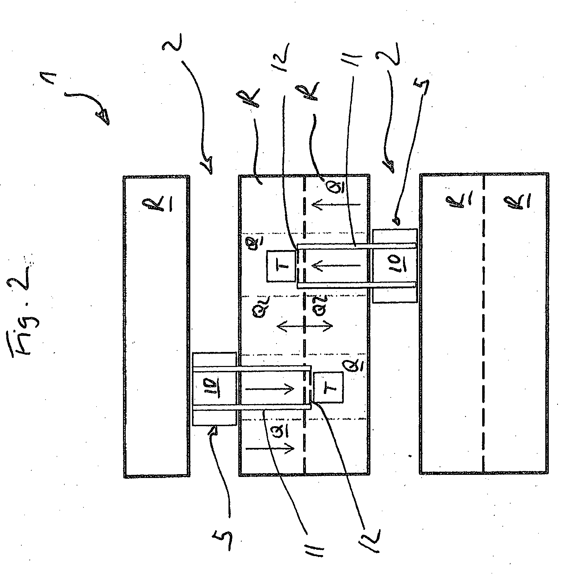

Figur. 2 einen vergrößerter Ausschnitt aus Figur 1;

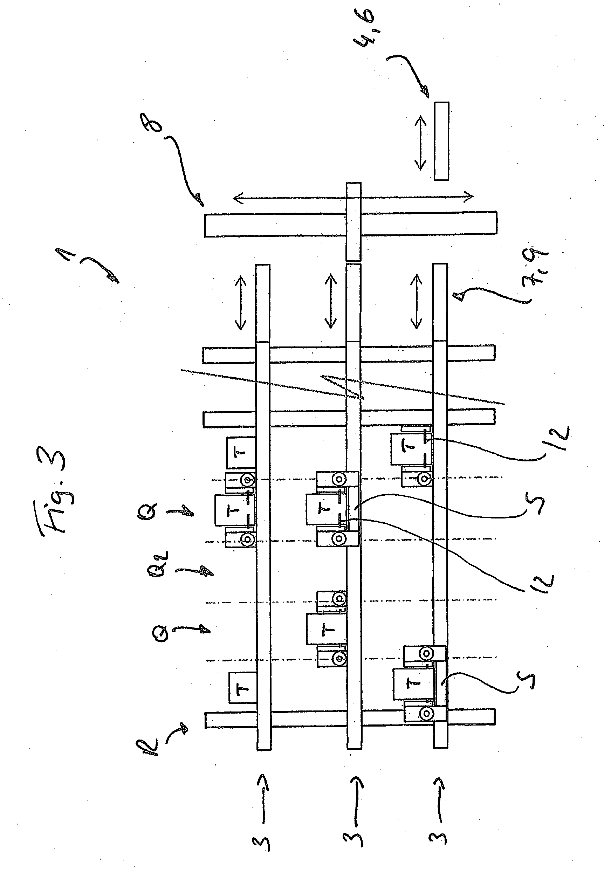

Figur 3 eine Seitenansicht von Figur 1; und
Figur 4 eine vereinfachte und schematische Ansicht des Lagers aus Figur 1 gemäß der Erfindung, das gemäß eines ersten Prinzips betrieben wird;
Figur 5 eine vereinfachte und schematische Ansicht des Lagers aus Figur 1 gemäß der Erfindung, das gemäß eines zweiten Prinzips betrieben wird;
Figur 6 eine vereinfachte und schematische Ansicht des Lagers aus Figur 1 gemäß der Erfindung, das gemäß eines dritten Prinzips betrieben wird; und
Figur 7 eine vereinfachte und schematische Ansicht des Lagers aus Figur 1 gemäß der Erfindung, das gemäß eines vierten Prinzips betrieben wird.

In den Figuren ist ein als Ganzes mit 1 bezeichnetes Lager mit mehreren Lagerregalgassen 2 und Lagerregalen R mit mehreren Ebenen 3 dargestellt.

Die Lagerregale R sind so angeordnet, dass die nicht außen angeordneten Lagerregale R jeweils paarweise aneinander angrenzend angeordnet sind und einseitig eine Regallagergasse 2 aufweisen. Es stoßen also die jeweils innen liegenden Lagerregale R mit ihren "Rücken" aneinander an.

Stirnseitig ist pro Lagerregalgasse 2 ein Lift 8 mit jeweils zwei Plätzen vorgesehen. In der untersten Ebene schließt sich an dem Lift 8 jeweils eine Einlagerbahn 4 und eine Auslagerbahn 6 an. Zwischen dem Lift 8 und dem Lagerregal R sind in jeder Ebene 3 entsprechende Ein- und Auslagerpufferstrecken 7 bzw. 9 angeordnet, um den Lift 8 von den in der Lagerregalgasse 2 fahrenden Satellitenfahrzeügen 5 (auch Shuttle genannt) zu entkoppeln.

Es versteht sich, dass die Einlagerbahnen 4 und Auslagerbahnen 6 an geeignete Förderstrecken für Kommissionierplätze etc. angeschlossen sind.

Die Shuttle 5 sind in jeder Regallagergasse 2 und dort in jeder Ebene 3 vorgesehen. Es handelt sich also um eine sogenannte "captive" Variante, in der die Shuttle 5 fest einer Ebene 3 zugeordnet sind und nicht die Ebenen oder Gassen wechseln, was theoretisch möglich wäre.

Die Shuttle 5 umfassen eine Transportplattform 10 zur Aufnahme der jeweiligen Transporteinheit T (Karton, Tablar, Container, Ware ohne Ladehilfsmittel, etc.). Seitlich an der Transportplattform 10 sind jeweils Teleskoparme 11 angeordnet, die die Transporteinheit T von der Plattform 10 abschieben bzw. auf diese heraufziehen. Dazu sind die Teleskoparme 11 beidseitig der Lagerregalgasse 2 in die Regale R ausfahrbar und weisen in bekannter Weise bewegliche Mitnehmer 12 auf.

In den Lagerregalen R sind in jeder Ebene 3 besondere Austauschplätze Q zum Querfördern von Transporteinheiten T von einem Regal R ins benachbarte Regal R vorgesehen, so dass ein Austausch der Transporteinheiten T innerhalb der Lagerregale R selber stattfindet und auf einen entsprechenden Aufwand in der Vorzone verzichtet werden kann.

Die Shuttle 5 bzw. deren Teleskoparme 11 können daher Transporteinheiten T in den Querförderplätzen Q ablegen und in den entsprechenden Platz im benachbarten Regal R schieben.

Dazu wird die jeweilige Transporteinheit T durch Beaufschlagung mit den Mitnehmern 12 der Teleskoparme 11 über den hinteren Stellplatz 13 des einen Querförderplatzes Q des ersten Regals R hinaus in den jeweiligen hinteren Stellplatz 13 des benachbarten Querförderplatzes Q des benachbarten Regals R hinein.

Ferner umfassen die Lagerregale R einen Querförderplatz Q2. Der Querförderplatz Q2 ist im Gegensatz zu den Querförderplätzen Q bidirektional ausgeführt, so dass ein Austausch von beiden Regalen R in das jeweils benachbarte Regal R erfolgen kann und die Richtung durch die erst abgelegte Transporteinheit bestimmt wird.

Die "normalen" Querförderplätze Q sind jeweils mehrfach vorhanden (hier je Regal R zweifach), so dass diese nicht sogleich entleert werden müssen, sondern - je nach Zusammenstellung des auszulagernden Auftrags - als Zwischenspeicher dienen, aus dem direkt ausgelagert wird. Somit können die Shuttle benachbarter Regalgassen entkoppelt werden.

Zur Auslagerung werden die Transporteinheiten T von den Shuttle 5 aus dem Lagerregal R entnommen und auf den Auslagerpuffer 9 abgegeben, der die Transporteinheiten T an den Lift 8 und somit an die Auslagerbahn 6 weiterfördert. In umgekehrter Wiese erfolgt die Einlagerung über die Einlagerbahnen 4, dem Lift 8 und dem Einlagerpuffer 7 sowie den Shuttle 5 in das jeweilige Lagerregal R.

Es versteht sich, dass die Einlagerung und Auslagerung auch entflechtet werden können und diese an unterschiedlichen Stellen am Lagerregal R stattfinden kann, z.B. an unterschiedlichen Stirnseiten oder sogar seitlich im Lagerregal R integriert.

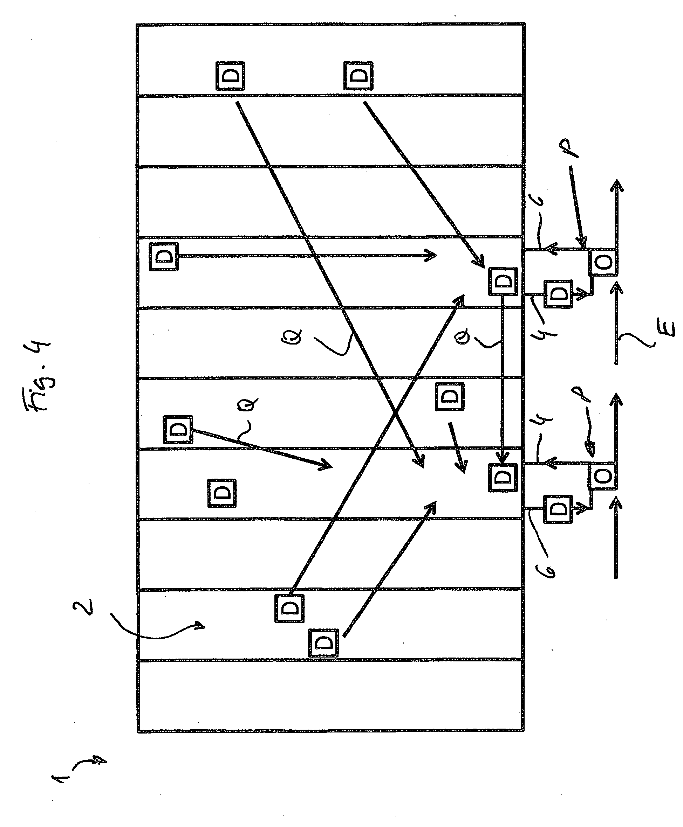

Unter Bezug auf die Figuren 4 - 7 werden nachfolgend vier Prinzipien des Betriebs anhand des obigen Lagers beschrieben.

In Figur 4 ist die sogenannte "Flughafen Abflug" Strategie beschrieben.
Gemäß diese Betriebsprinzips werden nur relevante Quelleinheiten D bzw. volle Quelleinheiten zu einem ausgewählten Gang mittels der Querförderplätze Q transferiert, wobei der Gang beruhend auf einer Minimierung der Bewegung in den Querförderplätzen Q zwischen Gängen und der Auftragsauslastung und -verteilung ausgewählt wird. Mit anderen Worten, zum Kommissionieren/Konsolidierung wird der Gang ausgewählt, der eine Minimierung der Bewegung der Produkteinheiten D zur Auftragsabarbeitung erlaubt und die Auftragsvervollständigung kann an einem einzelnen Gang bzw. einer einzigen Kommissionierstation P erfolgen, an der die Auftragseinheiten O mit allen Artikeln eines Auftrags aus den entsprechenden Produkteinheiten D gefüllt werden. Die Auftragseinheiten O können entweder von der Kommissionierstation P zurück ins Lager zur Lagerzwischenspeicherung und Konsolidierung transferiert werden oder zu einer Versandstation für den Abschluss des Auftrags über einen externen Förderer E, der die Kommissionierstationen verbindet. Im Falle der Konsolidierung von vollen Quelleinheiten werden zum selben Auftrag gehörende volle Quelleinheiten in einem Gang gelagert bis der Auftrag zur Abarbeitung ansteht. Dann werden die Quelleinheiten nacheinander aus dem Gang ausgelagert, wobei die vorgegebene Reihenfolge meist eingehalten werden kann.

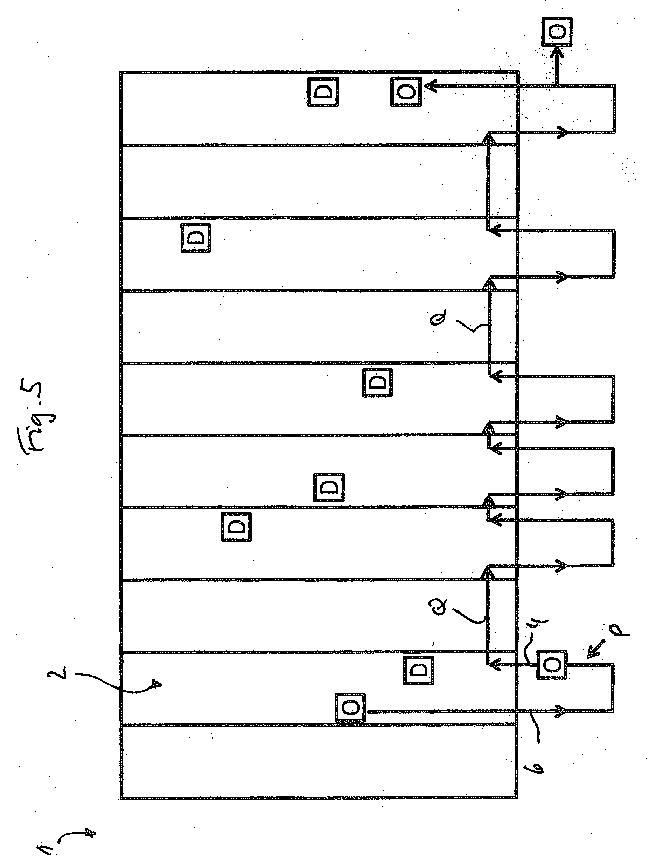

In Figur 5 ist die sogenannte "Limousinen" Strategie beschrieben.
Gemäß dieser Betriebsweise werden nur Auftragseinheiten O mittels der Querförderplätze Q durch das automatisierte Lager bewegt. Mit anderen Worten, das Kommissionieren wird an jedem relevanten Gang durchgeführt, in dem eine relevante Produkt- oder Quelleinheit gelagert ist und die Auftragseinheiten O "reisen" durch die Gänge 2 zu einer Mehrzahl von Kommissionierstationen P bis der Auftrag abgearbeitet ist.

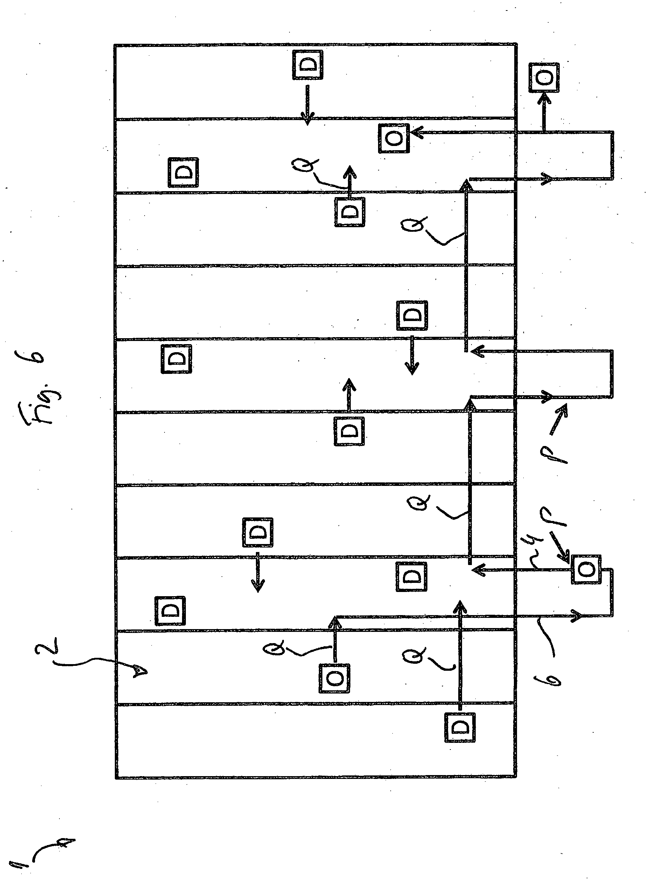

In Figur 6 ist die sogenannte "Bushaltestellen" Strategie beschrieben.
Gemäß dieser Betriebsstrategie werden sowohl Auftragseinheiten O als auch Produkteinheiten D im automatisierten Lager mittels der Querförderplätze Q transferiert. Mit anderen Worten, das Kommissionieren wird an wenigen ausgewählten Gängen 2 durchgeführt, an denen relevante Produkteinheiten D für einen Auftrag mittels der Querförderplätze Q konsolidiert werden und die Auftragseinheiten O "reisen" in gleicher Weise über mehrere Gänge 2 zu ausgewählten Kommissionierstationen P bis zur Auftragserfüllung. Die Konsolidierung der Auftragseinheiten O und Produkteinheiten D basiert auf einer Optimierung der Auftragsauslastung und -verteilung sowie der optimalen Verwendung solcher beweglichen Ressourcen, wie z.B. Regalbediengeräten, Lifte etc.

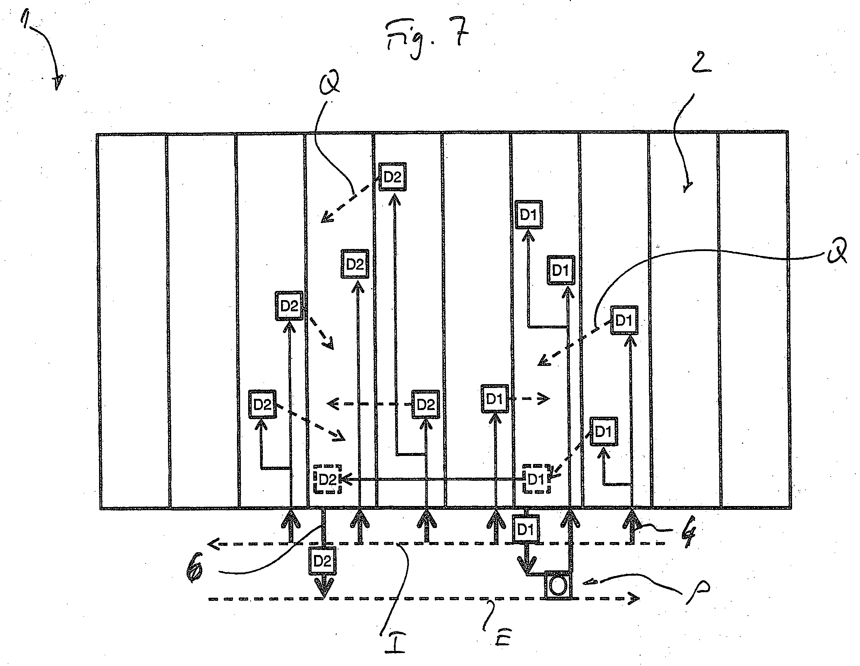

In Figur 7 ist die sogenannte "Flughafen Ankuft" Strategie beschrieben.
Gemäß diese Betriebsprinzips werden eingehende (einzulagernde) Quelleinheiten bzw. volle Quelleinheiten D im automatisierten Lager direkt in denjenigen Gang 2 oder nächstgelegenen möglichen Gang 2 eingelagert, der zur Auftragsabarbeitung benutzt oder höchstwahrscheinlich verwendet werden wird, basierend auf den zum Zeitpunkt der Einlagerung verfügbaren Informationen unter Berücksichtigung einer Minimierung des Querverschiebens in den Querförderplätzen Q. Diese Information umfasst, ist aber nicht beschränkt auf:
- Momentane Produktverteilung oder Abweichungen jedes Produkts im Lager;
- Bereits mit einzelnen Gängen verknüpfte Aufträge;
- Zur Abarbeitung anstehende Aufträge;
- Zusammenfassung von Familien bzw. Produktkategorien

Einzulagernde Quelleinheiten D1, einem ersten Auftrag zugehörig, und Quelleinheiten D2, einem zweiten Auftrag zugehörig, werden auf einem Eingangsförderer I in das Lager bzw. die entsprechenden Gänge 2 gefördert, der an die Einlagerbahnen 4 angeschlossen ist, basierend auf den obigen Regeln.

Falls kein Eingangsförderer I vorgesehen ist, kann die Versorgung/Einschleusung auch auf andere Weise durchgeführt werden nach Vorgabe der Lagerverwaltungssoftware z.B. manuell, durch AGV's, Depalletierer etc.

Innerhalb des Lagers werden die Quelleinheiten D mittels der Querförderplätze Q zu dem eigentlichen Gang 2 transferiert, an dem dann tatsächlich das Kommissionieren stattfindet, wobei z.B. eine Quelleinheit D1 nach Verwendung in einem Auftrag später zu einer Quelleinheit D2 werden kann, um in einem anderen Auftrag verwendet zu werden.

## Patentansprüche

1. Verfahren zum Bereitstellen von Transporteinheiten (T) aus einem Lager (1) auf mindestens einer Auslagerbahn (6), wobei
- die Transporteinheiten (T) in mehreren Lagerregalen (R) und Lagerregalebenen (3) gelagert werden, wobei die nicht außen angeordneten Lagerregale jeweils paarweise aneinander angrenzend angeordnet sind und einseitig eine Regallagergasse (2) aufweisen;
- mindestens eine Einlagerbahn (4) vorgesehen wird;
- die Transporteinheiten (T) in bzw. aus dem Lagerregal über eine Ein- und Auslagervorrichtung (5) pro Lagerregalgasse (2) ein- und ausgelagert werden;
- mindestens eine Auslagerbahn (6) vorgesehen wird;
- pro Lagerregalgasse (2) eine Ein- und Auslagervorrichtung (5) vorgesehen ist,
- mindestens ein Auslagerlift (8) verwendet wird, um die Transporteinheiten (T) der jeweils nachgeschalteten Auslagerbahn (6) zu übergeben;
**dadurch gekennzeichnet, dass** zwischen zwei angrenzenden Lagerregalen (R) ein direkter Austausch von Transporteinheiten (T) von einer Lagerregalgasse (2) in eine benachbarte Lagerregalgasse (2') über Querförderplätze (Q) in den Lagerregalen erfolgt, wobei die Ein- und Auslagervorrichtung (5) die Transporteinheiten (T) in den Querförderplätzen (Q) bewegt, d.h. ergibt keine weitere aktive Antriebstechnik im Regal, sondern die Ein- und Auslagervorrichtung selber ist der einzigaktive Mechanismus beim Querverlagern.

2. Verfahren nach Anspruch 1, **dadurch gekennzeichnet, dass** die Querförderplätze (Q) in jeder Ebene (3) oder ausgewählten Ebenen der Lagerregale vorgesehen sind.

3. Verfahren nach Anspruch 1 oder 2, **dadurch gekennzeichnet, dass** die Querförderplätze (Q) mittig oder in Regallängsrichtung dem Auslagerlift (8) näher oder in ausgewählten Positionen angeordnet sind.

4. Verfahren nach einem der vorhergehenden Ansprüche, **dadurch gekennzeichnet, dass** die Querförderplätze (Q) als Zwischenförderposition oder Zwischenspeicher dienen.

5. Verfahren nach einem der vorhergehenden Ansprüche, **dadurch gekennzeichnet, dass** die Querförderplätze (Q) zum bidirektionalen oder unidirektionalen Austausch ausgestaltet sind.

6. Verfahren nach Anspruch 5, **dadurch gekennzeichnet, dass** die Querförderplätze (Q) als Durchlaufregalplätze ausgestaltet sind.

7. Verfahren nach einem der vorhergehenden Ansprüche, **dadurch gekennzeichnet, dass** die Querförderplätze (Q) eine reibungsvermindernde Oberfläche aufweisen.

8. Verfahren nach einem der vorhergehenden Ansprüche, **dadurch gekennzeichnet, dass** die Querförderplätze (Q) strukturell verstärkt sind.

9. Verfahren nach einem der vorhergehenden Ansprüche, **dadurch gekennzeichnet, dass** die Ein- und Auslagervorrichtungen (5) die Transporteinheiten (T) in den Querförderplätzen (Q) zum Austausch doppelt tief einlagern oder mehrfach tief einlagern.

10. Verfahren nach einem der vorhergehenden Ansprüche, **dadurch gekennzeichnet, dass** die Ein- und Auslagervorrichtungen (5) Regalbediengeräte oder Einebenenregalbediengeräte, insbesondere Shuttle oder Satellitenfahrzeuge (5) sind.

11. Verfahren nach einem der vorhergehenden Ansprüche, **dadurch gekennzeichnet, dass** eine Auslagerbahnen (6) pro Lagerregalgasse (2) oder in ausgewählten Lagerregalgassen (2) vorgesehen ist.

12. Verfahren nach einem der vorhergehenden Ansprüche, **dadurch gekennzeichnet, dass** eine Einlagerbahnen (6) pro Lagerregalgasse (2) oder in ausgewählten Lagerregalgassen (2) vorgesehen ist.

13. Verfahren nach einem der vorhergehenden Ansprüche, **dadurch gekennzeichnet, dass** ein Auslagerlift (8) oder pro Lagerregalgasse (2) oder in ausgewählten Lagerregalgassen (2) vorgesehen ist.

14. Verfahren nach einem der vorhergehenden Ansprüche, **dadurch gekennzeichnet, dass** ein, ein Einlagerlift pro Lagerregalgasse (2) oder in ausgewählten Lagerregalgassen (2) vorgesehen ist.

15. Verfahren nach einem der vorhergehenden Ansprüche, **dadurch gekennzeichnet, dass** entweder:
a) Nur relevante Quelleinheiten werden zu einem bestimmten Gang mittels der Querförderplätze transferiert, wobei der Gang beruhend auf einer Minimierung der Bewegung in den Querförderplätzen zwischen Gängen und der Auftragsauslastung und -verteilung ausgewählt wird;
oder
b) Nur Auftragseinheiten werden im Lager mittels der Querförderplätze transferiert; oder
c) Sowohl Auftragseinheiten als auch Produkteinheiten werden im automatisierten Lager mittels der Querförderplätze transferiert basierend auf einer Optimierung der Auftragsauslastung und -verteilung sowie der beweglichen Ressourcen.

## Claims

1. Method for providing transport units (T) from a storage facility (1) on at least one storage-removal line (6), wherein
- the transport units (T) are stored in a plurality of storage racks (R) and storage rack levels (3), wherein the storage racks not arranged on the outside are each arranged in pairs adjoining one another and have a racking storage aisle (2) on one side;
- at least one storage-entry line (4) is provided;
- the transport units (T) are placed into storage in, and removed from storage from, the storage rack via a storage-entry and storage-removal apparatus (5) for each storage racking aisle (2);
- at least one storage-removal line (6) is provided;
- for each storage racking aisle (2) a storage-entry and storage-removal apparatus (5) is provided,
- at least one storage-removal lift (8) is used to transfer the transport units (T) to the storage-removal line (6) connected downstream in each case;
**characterised in that** between two adjoining storage racks (R), a direct exchange of transport units (T) takes place from one storage racking aisle (2) to an adjacent storage racking aisle (2') via transverse conveyance locations (Q) in the storage racks, wherein the storage-entry and storage-removal apparatus (5) moves the transport units (T) in the transverse conveyance locations (Q), i.e. there is no further active drive technology in the rack but rather the storage-entry and storage-removal apparatus itself is the single active mechanism for transverse displacement.

2. Method as claimed in claim 1, **characterised in that** the transverse conveyance locations (Q) are provided on each level (3) or selected levels of the storage racks.

3. Method as claimed in claim 1 or 2, **characterised in that** the transverse conveyance locations (Q) are arranged centrally or more closely to the storage-removal lift (8) in the longitudinal direction of the rack or in selected positions.

4. Method as claimed in any one of the preceding claims, **characterised in that** the transverse conveyance locations (Q) serve as an intermediate conveying position or temporary storage area.

5. Method as claimed in any one of the preceding claims, **characterised in that** the transverse conveyance locations (Q) are configured for bidirectional or unidirectional exchange.

6. Method as claimed in claim 5, **characterised in that** the transverse conveyance locations (Q) are configured as live storage rack locations.

7. Method as claimed in any one of the preceding claims, **characterised in that** the transverse conveyance locations (Q) have a friction-reducing surface.

8. Method as claimed in any one of the preceding claims, **characterised in that** the transverse conveyance locations (Q) are structurally reinforced.

9. Method as claimed in any one of the preceding claims, **characterised in that** the storage-entry and storage-removal apparatuses (5) place the transport units (T) into storage at double depth or multiple depths in the transverse conveyance locations (Q) for exchange purposes.

10. Method as claimed in any one of the preceding claims, **characterised in that** the storage-entry and storage-removal apparatuses (5) are racking serving units or single-level racking serving units, in particular shuttles or satellite vehicles (5).

11. Method as claimed in any one of the preceding claims, **characterised in that** a storage-removal line (6) is provided for each storage racking aisle (2) or in selected storage racking aisles (2).

12. Method as claimed in any one of the preceding claims, **characterised in that** a storage-entry line (6) is provided for each storage racking aisle (2) or in selected storage racking aisles (2).

13. Method as claimed in any one of the preceding claims, **characterised in that** a storage-removal lift (8) is provided for each storage racking aisle (2) or in selected storage racking aisles (2).

14. Method as claimed in any one of the preceding claims, **characterised in that** a storage-entry lift is provided for each storage racking aisle (2) or in selected storage racking aisles (2).

15. Method as claimed in any one of the preceding claims, **characterised in that** either:
a) only relevant source units are transferred to a specific aisle by means of the transverse conveyance locations, wherein the aisle is selected based upon minimisation of the movement in the transverse conveyance locations between aisles and order utilisation and distribution; or
b) only order units are transferred in the storage facility by means of the transverse conveyance locations; or
c) order units as well as product units are transferred in the automated storage facility by means of the transverse conveyance locations based upon optimisation of the order utilisation and distribution and the mobile resources.

## Revendications

1. Procédé de mise à disposition d'unités de transport (T) d'un magasin (1) sur au moins une voie de démagasinage (6), dans lequel
- les unités de transport (T) sont situées dans une pluralité de rayonnages de magasin (R) et sur une pluralité de niveaux de rayonnages de magasin (3), les rayonnages de magasin non situés à l'extérieur étant disposés par paires de façon adjacente les uns aux autres et comportant sur un côté une allée de magasin à rayonnages (2) ;
- il est prévu au moins une voie d'emmagasinage (4) ;
- les unités de transport (T) sont emmagasinées et démagasinées dans le rayonnage de magasin respectivement depuis celui-ci par le biais d'un dispositif d'emmagasinage et de démagasinage (5) pour chaque allée de rayonnage de magasin (2) ;
- il est prévu au moins une voie de démagasinage (6) ;
- pour chaque allée de rayonnage de magasin (2), il est prévu un dispositif d'emmagasinage et de démagasinage (5) ;
- au moins un élévateur de démagasinage (8) est utilisé pour transférer les unités de transport (T) de chaque voie de démagasinage (6) située en aval ;
**caractérisé en ce que**, entre deux rayonnages de magasin (R) adjacents, un échange direct d'unités de transport (T) d'une allée de rayonnage de magasin (2) dans une allée de rayonnage de magasin (2') adjacente est effectué par le biais d'emplacements de transport transversaux (Q) dans les rayonnages de magasin, le dispositif d'emmagasinage et de démagasinage (5) déplaçant les unités de transport (T) dans les emplacements de transport transversaux (Q), c'est-à-dire qu'il n'y a pas d'autre technique d'entraînement dans le rayonnage, mais que le dispositif d'emmagasinage et de démagasinage lui-même est le seul mécanisme actif en cas de déplacement transversal.

2. Procédé selon la revendication 1, **caractérisé en ce que** les emplacements de transport transversaux (Q) sont prévus à chaque niveau (3) ou à des niveaux sélectionnés des rayonnages de magasin.

3. Procédé selon la revendication 1 ou 2, **caractérisé en ce que** les emplacements de transport transversaux (Q) sont disposés au milieu ou sont plus proches de l'élévateur de démagasinage (8) ou à des positions sélectionnées par référence à la direction longitudinale des rayonnages.

4. Procédé selon l'une quelconque des revendications précédentes, **caractérisé en ce que** les emplacements de transport transversaux (Q) sont utilisés comme position de transport intermédiaire ou comme magasin intermédiaire.

5. Procédé selon l'une quelconque des revendications précédentes, **caractérisé en ce que** les emplacements de transport transversaux (Q) sont adaptés pour l'échange bidirectionnel ou unidirectionnel.

6. Procédé selon la revendication 5, **caractérisé en ce que** les emplacements de transport transversaux (Q) sont conçus comme des emplacements de rayonnage de passage.

7. Procédé selon l'une des revendications précédentes, **caractérisé en ce que** les emplacements de transport transversaux (Q) possèdent une surface de réduction de friction.

8. Procédé selon l'une des revendications précédentes, **caractérisé en ce que** les emplacements de transport transversaux (Q) sont structurellement renforcés.

9. Procédé selon l'une des revendications précédentes, **caractérisé en ce que** les dispositifs d'emmagasinage et de démagasinage (5) emmagasinent les unités de transport (T) situées dans les emplacements de transport transversaux (Q) sur une double profondeur ou sur de multiples profondeurs pour effectuer l'échange.

10. Procédé selon l'une des revendications précédentes, **caractérisé en ce que** les dispositifs d'emmagasinage et de démagasinage (5) sont des gerbeurs ou des gerbeurs à un niveau, en particulier des navettes ou des véhicules satellites (5).

11. Procédé selon l'une des revendications précédentes, **caractérisé en ce qu'**il est prévu une voie de démagasinage (6) pour chaque allée de rayonnages de magasin (2) ou dans des allées de rayonnages de magasin (2) sélectionnées.

12. Procédé selon l'une des revendications précédentes, **caractérisé en ce qu'**il est prévu une voie d'emmagasinage (6) pour chaque allée de rayonnages de magasin (2) ou dans des allées de rayonnages de magasin (2) sélectionnées.

13. Procédé selon l'une des revendications précédentes, **caractérisé en ce qu'**il est prévu un élévateur de démagasinage (8) soit pour chaque allée de rayonnages de magasin (2) soit dans des allées de rayonnages de magasin (2) sélectionnées.

14. Procédé selon l'une des revendications précédentes, **caractérisé en ce qu'**il est prévu un élévateur d'emmagasinage par allée de rayonnages de magasin (2) ou dans des allées de rayonnages de magasin (2) sélectionnées.

15. Procédé selon l'une des revendications précédentes, **caractérisé en ce que** :
a) seules des unités sources pertinentes sont transférées à un passage déterminé au moyen des emplacements de transport transversaux, le passage étant sélectionné sur la base d'une minimisation du mouvement dans les emplacements de transport transversaux entre des passages et de la capacité et la répartition des commandes ;
ou bien
b) Seules les unités de commande sont transférées dans le magasin au moyen des emplacements de transport transversaux ; ou bien
c) des unités de commande et des unités de produits sont transférées dans le magasin automatisé au moyen des emplacements de transport transversaux sur la base d'une optimisation de capacité et la répartition des commandes et des ressources mobiles.
